# EUROPEAN PATENT APPLICATION

(11) **EP 4 647 526 A2**
(43) Date of publication of application: **12.11.2025**
(21) Application number: 25173985.0
(22) Date of filing: 02.05.2025
(51) Int. Cl.: C23C 2/08, C23C 30/00

(54) **ALUMINUM ALLOY BUS BAR AND METHOD OF MANUFACTURING ALUMINUM ALLOY BUS BAR**

(30) Priority: 10.05.2024 JP 2024077121
(71) Applicant: Yazaki Corporation, Tokyo 108-0075 (JP)
(72) Inventor: Adachi, Hayato, Susono-shi, Shizuoka, 410-1194 (JP); Ikeya, Hayato, Susono-shi, Shizuoka, 410-1194 (JP)
(74) Representative: Grünecker Patent- und Rechtsanwälte PartG mbB

(57) **Abstract**

An aluminum alloy bus bar (1) includes: a bus bar base material (2) made of an aluminum alloy; and a tin-plated layer (3) formed on at least a part of a surface of the bus bar base material and in direct contact with the surface; in which aluminum in the bus bar base material is directly bonded with tin in the tin-plated layer. The method of manufacturing the aluminum alloy bus bar comprises: preheating the bus bar base material by immersing the bus bar base material in a melt, which is formed by melting metal that constitutes the tin-plated layer, for a predetermined time; applying ultrasonic waves to the melt while the bus bar base material is immersed in the melt; and taking the bus bar base material out of the melt while applying ultrasonic waves to the melt.

## Description

### TECHNICAL FIELD

The present invention relates to an aluminum alloy bus bar and a method of manufacturing an aluminum alloy bus bar.

### BACKGROUND

With an increase of electric current in automobiles, wire harnesses used in electric vehicles tend to be replaced by bus bars. Moreover, the size of battery packs for electric vehicles tends to increase year by year to improve a driving range, and the need to reduce the weight of vehicles also increases from the viewpoint of improving fuel efficiency. Therefore, aluminum, which is lighter than conventional copper, is attracting attention as a material for wire harnesses and bus bars.

Aluminum is a lightweight metal with good electrical conductivity, and is relatively inexpensive, so it is often used for electric wires, bus bars, electrodes, or the like. However, aluminum is highly reactive with oxygen, so that an oxide film with a thickness of about 10 nm is formed on the surface of aluminum. Therefore, in the case of pressurized contact, the contact resistance of precious metals, such as gold and silver, copper, and nickel is generally several µΩ to several 10 µΩ, while the contact resistance of aluminum is known to be more than one order of magnitude higher than 100 µΩ. When aluminum alloy is used as a conductor, plating is generally used to reduce the effect of the surface oxide film. In addition, plating is necessary for the purpose of reducing the contact resistance and suppressing the heat generation at electrical connections (terminals) at which wire harnesses and bus bars are electrically connected.

JP 2014-002977 A describes a conductive member that is electrically connected to an electrical member made of aluminum or an aluminum alloy by pressurized contact. A tin-plated layer is formed on a surface of the conductive member in contact with the electrical member through a barrier metal or an alloy layer to reduce contact resistance.

### SUMMARY OF THE INVENTION

Generally, electroplating or electroless plating is used when plating a surface of aluminum. However, electroplating and electroless plating are unsuitable for mass production, since the plating process takes time due to a complicated plating process and a thickness of a plating layer increased by deposition. In addition, when electroplating is performed on aluminum, a pre-treatment called a zincate treatment is required first to remove an oxide film existing on a surface layer of aluminum, and a process called a double zincate treatment, in which the treatment is performed twice in total, is often used. Therefore, the conventional method has a problem that the plating process is complicated and the manufacturing cost increases.

The present invention has been made in view of such problems in the conventional technology. An object of the present invention is to provide an aluminum alloy bus bar formed by tin plating on a surface of an aluminum alloy by a simple method, and to provide a method for manufacturing an aluminum alloy bus bar.

An aluminum alloy bus bar according to a first aspect of the present invention includes a bus bar base material made of an aluminum alloy; and a tin-plated layer formed on at least a part of a surface of the bus bar base material and in direct contact with the surface, in which aluminum in the bus bar base material is directly bonded to tin in the tin-plated layer.

A method of manufacturing the aluminum alloy bus bar according to a second aspect of the present invention includes steps of: preheating the bus bar base material by immersing the bus bar base material in a melt, which is formed by melting a metal that constitutes the tin-plated layer, for a predetermined time; applying ultrasonic waves to the melt while the bus bar base material is immersed in the melt; and taking the bus bar base material out of the melt while applying ultrasonic waves to the melt.

According to the present invention, it is possible to provide an aluminum alloy bus bar formed by tin plating on a surface of an aluminum alloy and a method for manufacturing an aluminum alloy bus bar in a simple manner.

### BRIEF DESCRIPTION OF DRAWINGS

FIG. 1 is a cross-sectional view illustrating an example of an aluminum alloy bus bar according to the present embodiment.
FIG. 2 is a graph illustrating softening characteristics of alloy A1100.
FIG. 3 is a graph illustrating an example of changes in mechanical properties (hardness) of alloy A6101 with temperature.
FIG. 4 is a photograph illustrating appearance of a test piece of Example 1.
FIG. 5 is a photograph illustrating a result of scanning electron microscope (SEM) observation of the cross section of the test piece of Example 1.
FIG. 6 is a graph illustrating the relationship between the Vickers hardness of an aluminum alloy base plate (base material), the tensile strength σᵤₜₛ, and yield stress σ_{ys} of the test pieces of Example 1 to 10 using A6101 after the formation of the tin-plated layer.
FIG. 7A is a photograph illustrating a surface condition of the test piece of Example 3.
FIG. 7B is a photograph illustrating the surface condition of the test piece of Comparative Example 4.
FIG. 8 is a schematic diagram illustrating a device that measures contact resistance.
FIG. 9 is a graph for explaining definition of adhesion force of the plated layer.
FIG. 10 is a photograph illustrating a result of observation of scratch marks formed on the test piece in the graph of FIG. 9, with a scanning electron microscope.
FIG. 11 is a photograph illustrating a result of observation of an interface between a tin-plated layer and an aluminum alloy base plate in the test piece of Example 3, with a transmission electron microscope (TEM).

### DETAILED DESCRIPTION OF THE INVENTION

Hereinafter, the aluminum alloy bus bar and the manufacturing method of the aluminum alloy bus bar according to the present embodiment will be described in detail with reference to the drawings. The dimensional ratios in the drawings are exaggerated for the sake of explanation, and may differ from the actual ratios.

### [Aluminum alloy bus bar]

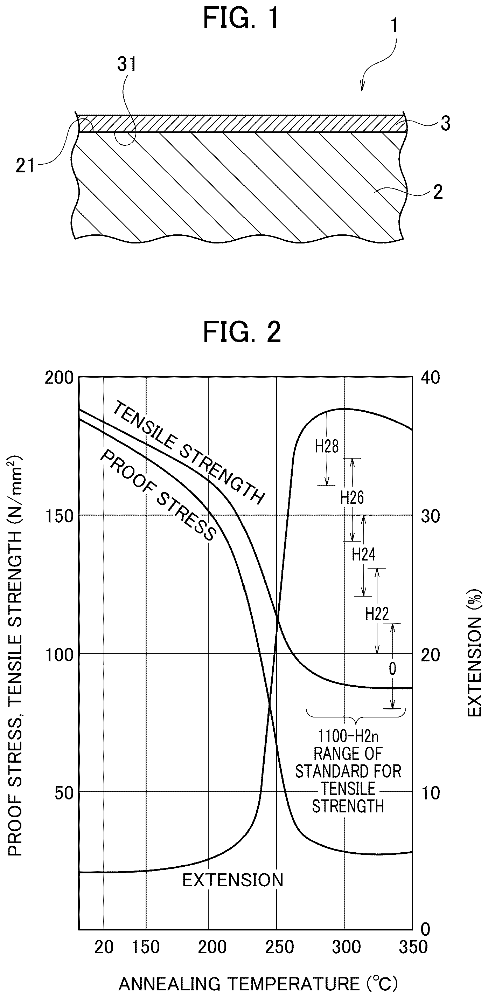

As illustrated in FIG. 1, the aluminum alloy bus bar 1 according to this embodiment includes a bus bar base material 2 made of an aluminum alloy, and a tin-plated layer 3 formed on at least a part of a surface of the bus bar base material and in direct contact with the surface.

The bus bar base material 2 is an electroconductive member mainly containing an aluminum alloy. The bus bar base material 2 may be a member made of an aluminum alloy. The aluminum alloy may contain at least one element selected from the group consisting of Si, Fe, Cu, Mn, Mg, Cr, Zn, and Ti in the raw material aluminum, such as an aluminum ingot. The aluminum alloy may contain at least one element selected from the group consisting of Si, Fe, Cu, Mn, Mg, Cr, Zn, and Ti, and the remainder may be aluminum and unavoidable impurities.

Preferably, pure aluminum having a purity of 99.7 % by mass or more is used as an aluminum ingot. Examples of the aluminum ingots include, among the aluminum ingots specified in JIS H2102:2011 (Aluminum ingots for remelting), Class 1 aluminum ingots having a purity of 99.7 % by mass, Special Class 2 aluminum ingots having a purity of 99.85 % by mass or more, and Special Class 1 aluminum ingots having a purity of 99.90 % by mass or more. In the present embodiment, not only expensive and high-purity aluminum ingots as in Special Class 1 and Special Class 2, but also relatively inexpensive Class 1 aluminum ingots can be used.

The content of Si in an aluminum alloy is 0.2 % by mass or more, and less than 0.7 % by mass, preferably 0.3 to 0.7 % by mass. Preferably, the content of Fe in an aluminum alloy is less than 0.5% by mass.

Preferably, the content of Cu in the aluminum alloy is less than 0.1 % by mass. The content of Mn in the aluminum alloy may be 0.03 to 0.1 % by mass, or less than 0.03 % mass. The content of Mg in the aluminum alloy is 0.35 to 0.9 % by mass, or preferably 0.35 to 0.8 % by mass. The content of Cr may be 0.03 to 0.1 % by mass, or less than 0.03 % by mass in the aluminum alloy. Preferably, the content of Zn in the aluminum alloy is less than 0.1 % by mass. The content of Ti in the aluminum alloy may be 0.00 to 0.1 % by mass, or less than 0.00 % by mass. Preferably, the content of B in the aluminum alloy is less than 0.06 % by mass.

Aluminum may contain very small amounts of unavoidable impurities. Examples of unavoidable impurities that may be contained in aluminum include nickel (Ni), rubidium (Rb), tin (Sn), vanadium (V), gallium (Ga), boron (B), sodium (Na), zirconium (Zr), and the like. These impurities are unavoidably included to the extent that they do not interfere with the effect by the present embodiment and do not particularly affect the properties of the aluminum alloy according to the present embodiment. Elements originally contained in an aluminum ingot to be used are also included in unavoidable impurities. The total content of unavoidable impurities in an aluminum alloy is preferably 0.15 % by mass or less, and more preferably 0.10 % by mass or less.

The bus bar base material 2 is not particularly limited in shape, but can be, for example, formed as a flat plate.

Here, examples of aluminum alloys generally used as electroconductive members may include industrial pure aluminum such as an A1050 alloy, an A1070 alloy, and an A1100 alloy, and an A6101 alloy specified in JIS H4100 (aluminum and aluminum alloy extruded profiles). The A1050 alloy guarantees 61% IACS conductivity according to the JIS standards (Japanese Industrial Standards). However, the problem with pure aluminum alloys such as A1050, A1070, and A1100 is that they soften due to a decrease in strength, such as tensile strength, by "annealing" in which heat is applied to the material. As a typical example, the softening properties of A1100 are illustrated in Fig. 2. When the annealing temperature exceeds 200 °C, the mechanical properties such as tensile strength and proof stress are greatly reduced, as illustrated in Fig. 2.

When the strength of pure aluminum is insufficient, an A6101 alloy, which guarantees 55% IACS conductivity, is often used. The A6101 alloy is subjected to a T6 treatment, and the standard mechanical properties are tensile strength of 220 MPa, yield stress of 195 MPa, and elongation of 15% (1.6 mm thick, 50 mm). Such an A6101 alloy has fine Mg-Si precipitates in the aluminum mother phase, and achieves high strength by the Orowan mechanism. However, compared with pure aluminum for industrial use, it is a problem that the processability of press, punching, and bending, which are post-processing, is reduced for an A6101 - T6 alloy.

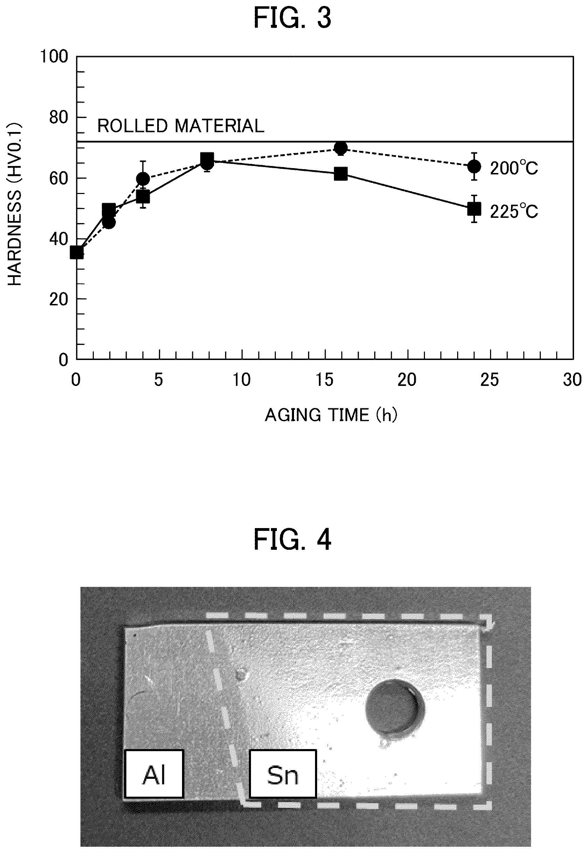

In an automotive environment, a bus bar requires fastening reliability, vibration durability, and high-temperature durability. In addition, it is difficult to apply pure aluminum for industrial use due to required sufficient strength for electrical connection and vibration durability for bolting. Therefore, it is ideal to use the A6101 alloy as a base material of the bus bar. However, since the A6101 alloy is an age-hardened alloy, and lacks heat resistance, changes in mechanical properties and other physical properties due to temperature changes are concerned. Fig. 3 illustrates an example of changes in mechanical properties (hardness) by applying heat to the A6101 alloy for a long time. As illustrated in Fig. 3, it can be seen that Vickers hardness decreases by applying heat to the A6101 alloy for a long time.

However, as will be described below, with the aluminum alloy bus bar 1 according to the present embodiment, the bus bar base material 2 is immersed in the melt of tin, preheated and irradiated with ultrasonic waves, and then taken out of the melt of tin to form the tin-plated layer 3. In this case changes in mechanical properties of the bus bar base material 2 can be minimized due to the short time of immersion and preheating.

Therefore, as the aluminum alloy constituting the bus bar base material 2 in the aluminum alloy bus bar 1, the A6101 alloy specified in JIS H4100 can be suitably used. Table 1 shows a composition range of the A6101 alloy.

**[Table 1]**

| Alloy | Alloy Composition (wt %) | | | | | | | | | |
|---|---|---|---|---|---|---|---|---|---|---|
| | Si | Fe | Cu | Mn | Mg | Cr | Zn | Ti | B | Al |
| A6101 | 0.30 -0.7 | ≤0.5 | ≤0.1 | ≤0.03 | 0.35 -0.8 | ≤0.03 | ≤0.1 | - | ≤0.06 | bal. |

The tin-plated layer 3 may be a plated layer including only tin or a plated layer including an alloy of tin and other metals. The other metals may include at least one selected from the group consisting of bismuth (Bi), indium (In), zinc (Zn), and lead (Pb). However, it is preferable that tin is the main component of the tin-plated layer 3. Specifically, the tin content in the tin-plated layer 3 may be 50 % by mass or more, 60 % by mass or more, 70 % by mass or more, 80 % by mass or more, and 90 % by mass or more.

The thickness of the tin-plated layer 3 is not particularly limited, but may be about 1 µm to 10 µm, for example. The thickness of the tin-plated layer 3 can be measured by X-ray fluorescence test method (XRF) in accordance with JIS H8501 (Methods of thickness test for metallic coatings).

With the aluminum alloy bus bar 1, the tin-plated layer 3 may be formed on at least a part of a surface of the bus bar base material 2, or an entire surface of the bus bar base material 2. The tin-plated layer 3 directly contacts the surface of the bus bar base material 2. That is, as illustrated in FIG. 1, between the surface (upper surface) 21 of the bus bar base material 2 and the surface (lower surface) 31 of the tin-plated layer 3, there are no layers made of metals other than aluminum and tin and there is no oxide film, and the tin-plated layer 3 directly contacts the surface 21 of the bus bar base material 2.

As described above, aluminum, which is an active metal, combines with oxygen in the atmosphere to form a thin film of aluminum oxide on the surface. Here, with the aluminum alloy bus bar 1, the bus bar base material 2 is immersed in a melt of tin, preheated and irradiated with ultrasonic waves, and then taken out of the melt of tin to allow the tin-plated layer 3 to be formed. At this point, the oxide film of the bus bar base material 2 is destroyed due to a cavitation phenomenon caused by ultrasonic irradiation. Therefore, the tin-plated layer 3 can directly contact the aluminum of the bus bar base material 2 without the oxide film. As a result, the aluminum of the bus bar base material 2 and the tin of the tin-plated layer 3 are directly bonded, so that the tin-plated layer 3 can adhere to the surface of the bus bar base material 2. Furthermore, the tin-plated layer 3 is in direct contact with the aluminum of the bus bar base material 2, so that electroconductive properties between the tin-plated layer 3 and the bus bar base material 2 can be improved.

For the aluminum alloy bus bar 1, preferably, the bus bar base material 2 on which the tin-plated layer 3 is formed has Vickers hardness of 28HV_{0.1} to 90HV_{0.1}. As will be described below, when the Vickers hardness of the bus bar base material 2 on which the tin-plated layer 3 is formed is within this range, the yield stress of the aluminum alloy bus bar 1 is 70 MPa to 220 MPa. The aluminum alloy bus bar 1 with the yield stress within this range can be suitably used as a bus bar for electric vehicles due to excellent fastening reliability and vibration durability. The yield stress of the aluminum alloy bus bar can be measured in accordance with JIS Z2241 (Metallic materials-Tensile testing-Method of test at room temperature).

In the aluminum alloy bus bar 1, the adhesion force of the tin-plated layer 3 to the bus bar base material 2 is preferably 4.9 N or more. In this case, the tin-plated layer 3 is firmly bonded to the surface of the bus bar base material 2, so that the tin-plated layer 3 can be prevented from being peeled off even when the aluminum alloy bus bar 1 is fastened with bolts and nuts. The adhesion force of the tin-plated layer 3 to the bus bar base material 2 can be measured by a method described below.

The surface of the aluminum alloy bus bar 1 has a contact resistance value of preferably 2.6 mΩ or less. The tin-plated layer 3 of the aluminum alloy bus bar 1 is in direct contact with the bus bar base material 2, so that the contact resistance can be reduced. As a result, heat generation at the contact part at which the aluminum alloy bus bar 1 is in contact with other parts can be suppressed. The contact resistance value for the surface of the aluminum alloy bus bar 1 can be measured by a method described later.

### [Method of Manufacturing Aluminum alloy bus bar]

Next, the method of manufacturing the aluminum alloy bus bar 1 according to the present embodiment will be described.

Generally, when electroplating or electroless plating is performed on a surface of an aluminum member, it is necessary to remove an oxide film on the surface. In addition, in order to improve the adhesion of plating, a method of plating nickel or the like as a base is used when tin plating is performed. Therefore, in the conventional method, the plating process is complicated.

However, in the manufacturing method according to the present embodiment, unlike the conventional electroplating method and the electroless plating method, the tin-plated layer 3 is formed using ultrasonic waves.

Specifically, the bus bar base material 2 is prepared first. The bus bar base material 2 is formed into any shape, followed by degreasing and cleaning, as necessary. However, there is no need for a treatment to remove the oxide film formed on the surface of the bus bar base material 2, for example, a zincate treatment.

Next, a melt is prepared by melting a metal constituting the tin-plated layer. Specifically, after the metal constituting the tin-plated layer is put into a heat-resistant container, the heat-resistant container is heated to melt the metal. That is, when the metal constituting the tin-plated layer is only tin, tin is filled in a heat-resistant container and heated. When the metal constituting the tin-plated layer is an alloy of tin and other metals, tin and other metals are filled in a heat-resistant container and heated. The heating temperature at this point is not particularly limited as long as the metal is melted, but can be set to, for example, 260 to 300°C. That is, the melting point of tin is about 232°C, the metal can be melted by heating to this temperature.

Then, the bus bar base material 2 is immersed in the melt, which is formed by melting the metal constituting the tin-plated layer, for a predetermined time to preheat the bus bar base material 2. By preheating the bus bar base material, the deposition of the tin-plated layer 3 is enhanced, and a tin-plated layer 3 can be formed in a substantially uniform manner on the surface of the bus bar base material 2. Note that the immersion time of the bus bar base material 2 in the melt is preferably short, for example, within 1 minute, and more preferably within 30 seconds. The immersion time of the bus bar base material 2 in the melt is short, so that deterioration of mechanical properties of the bus bar base material 2 can be avoided.

After preheating the bus bar base material 2, ultrasonic waves are applied to the melt while the bus bar base material 2 is immersed in the melt. Thus, the oxide film on the surface of the bus bar base material 2 is destroyed and removed by a cavitation effect, and a vibration and mixing effect of ultrasonic waves. The output of the applied ultrasonic waves is not particularly limited as long as the output is sufficient to destroy and remove the oxide film on the surface of the bus bar base material 2. The frequency of the ultrasonic waves can be set to 16 to 45 kHz, and the output can be set to 20 W or more, for example.

Then, while applying ultrasonic waves to the melt, the bus bar base material 2 is taken out from the melt. Specifically, while applying ultrasonic waves to the melt, the bus bar base material 2 is pulled up from the melt. At this point, the pulling speed of the bus bar base material 2 is not particularly limited, but it can be set to 0.5 mm/s to 5.0 mm/s, for example.

When the bus bar base material 2 is taken out from the melt, the bus bar base material 2 may be surrounded by an inert atmosphere, although it can be surrounded by the atmosphere. When the bus bar base material 2 is surrounded by an inert atmosphere, oxidation of the bus bar base material 2 and the tin-plated layer 3 can be suppressed. The inert atmosphere can be a nitrogen atmosphere or an argon atmosphere.

After the bus bar base material 2 is taken out from the melt, the aluminum alloy bus bar 1 can be obtained by cooling it to room temperature.

Thus, the aluminum alloy bus bar 1 according to the present embodiment includes the bus bar base material 2 made of an aluminum alloy and the tin-plated layer 3 formed on at least a part of a surface of the bus bar base material 2 and in direct contact with the surface. The aluminum in the bus bar base material 2 is directly bonded to the tin of the tin-plated layer.

In the aluminum alloy bus bar 1, the tin-plated layer 3 is in direct contact with the bus bar base material 2 without an oxide film or the like, and the aluminum in the bus bar base material 2 is directly bonded to the tin of the tin-plated layer 3. Therefore, the adhesion between the bus bar base material 2 and the tin-plated layer 3 can be enhanced, and the electroconductive properties can be further improved. As a result, the aluminum alloy bus bar 1 can be suitably used as a bus bar used for wiring in a battery pack of an electric vehicle or the like.

In the aluminum alloy bus bar 1, the bus bar base material 2 is preferably made of an A6101 alloy as specified in JIS H4100. The A6101 alloy has high electroconductivity and excellent mechanical properties. In addition, when manufacturing the aluminum alloy bus bar 1, the time required to immerse the bus bar base material 2 in melt is short, so that changes in the mechanical properties of the bus bar base material 2 can be minimized. Therefore, it is possible to obtain the aluminum alloy bus bar 1 having excellent electroconductive and mechanical properties.

In the aluminum alloy bus bar 1, the Vickers hardness of the bus bar base material 2 on which the tin-plated layer 3 is formed is preferably 28HV_{0.1} to 90HV_{0.1}. In this case, the yield stress of the aluminum alloy bus bar 1 is 70 MPa to 220 MPa, so that good fastening reliability and vibration durability can be obtained.

In the aluminum alloy bus bar 1, adhesion force of the tin-plated layer 3 to the bus bar base material 2 is preferably 4.9 N or more. In this case, the tin-plated layer 3 is firmly bonded to the surface of the bus bar base material 2, so that peeling of the tin-plated layer 3 can be suppressed even when the aluminum alloy bus bar 1 is fastened with a fastening member.

The contact resistance value of the surface of the aluminum alloy bus bar is preferably 1.0 mΩ or less. Thus, heat generation at the contact part at which the aluminum alloy bus bar 1 and other parts come into contact with each other can be suppressed.

The manufacturing method of the aluminum alloy bus bar according to the present embodiment includes a step of preheating the bus bar base material 2 by immersing the bus bar base material 2 in a melt, which is formed by melting the metal constituting the tin-plated layer 3, for a predetermined time; a step of applying ultrasonic waves to the melt while the bus bar base material 2 is immersed in the melt; and a step of taking the bus bar base material 2 out of the melt while applying ultrasonic waves to the melt.

In the manufacturing method according to the present embodiment, a cavitation phenomenon occurs in the molten metal in the heat-resistant container during ultrasonic wave oscillation, and the oxide film on the aluminum surface (the surface of the bus bar base material 2) can be physically destroyed by the phenomenon. Then, the oxide film on the aluminum surface is removed, and at the same time, a plated layer of the molten metal is formed. Therefore, the molten metal is firmly bonded to the aluminum of the bus bar base material 2, so that the tin-plated layer 3 having excellent adhesion and electroconductive properties can be formed.

Furthermore, in the method of manufacturing an aluminum alloy bus bar according to the present embodiment, the pre-treatment of the bus bar base material 2 by a zincate treatment is not required. Moreover, the pre-treatment step can be omitted, so that the tin-plated layer 3 can be formed in a short time. For example, the tin-plated layer 3 can be formed in about 30 to 60 seconds. No plating solution is used in the manufacturing method according to the present embodiment, so that a waste liquid treatment process is unnecessary. Furthermore, no plating solution is used, so that the waste liquid treatment facility is unnecessary, and the production location is not limited. The manufacturing facility of the present embodiment is simple, so that the space is saved, and the facility can be installed on a production line side. Moreover, the plating process is simplified, and there is no waste liquid of the plating solution, so that the carbon footprint (CFP) can be reduced. Furthermore, in this manufacturing method, the tin-plated layer 3 can be formed as much as necessary on a required portion of the bus bar base material 2.

In the step of taking the bus bar base material 2 out of the melt in the method of manufacturing an aluminum alloy bus bar, it is preferable that the bus bar base material 2 is surrounded by an inert atmosphere. Thus, oxidation of the bus bar base material 2 and the tin-plated layer 3 can be suppressed.

Hereinafter, the present embodiment will be described in more detail with reference to examples and comparative examples, but the embodiment is not limited to these examples.

### [Example 1]

First, an aluminum alloy base plate (base material) made of A6101-T6 alloy was prepared. Next, the base plate was cut into a plate having a length of 20 mm, a width of 40 mm, and a thickness of 2 mm. The aluminum alloy base plate was not subjected to zincate treatment.

Then, a crucible was placed in the ultrasonic plating equipment, and after a crucible was filled with tin, the crucible was heated to 260 °C. In this manner, tin was melted in the crucible.

After immersing the aluminum alloy base plate in the melt of tin in the crucible, the aluminum alloy base plate was preheated for a time (immersion time) indicated in Table 3. After preheating, the ultrasonic oscillation switch was turned on, and the aluminum alloy base plate was pulled up from the melt at a predetermined speed while oscillating a horn in the ultrasonic plating equipment. At this point, the crucible was entirely purged with N₂ gas, and filled with N₂ gas. The output of the ultrasonic waves (output of the horn) and the width of the horn are shown in Table 2, and the pull-up speed of the aluminum alloy base plate is shown in Table 3.

Thereafter, the pulled up aluminum alloy base plate was cooled to room temperature, and the test piece of this example in which a tin-plated film was directly formed on the surface of the aluminum alloy base plate was obtained. Table 3 shows the tin purity of the tin-plated layer formed on the surface of the aluminum alloy base plate.

### [Examples 2 to 11]

Test pieces of the examples were obtained by the same method as in Example 1 except that the material and quality of the aluminum alloy base plate, the output of ultrasonic waves (horn), the temperature of the melt of tin, the immersion time (preheating time) of the aluminum alloy base plate in the melt of tin, and the pull-up speed of the aluminum alloy base plate were changed, as shown in Tables 2 and 3. The tin purity of the tin-plated layer formed on the surface of the aluminum alloy base plate in the test pieces of the examples is also shown Table 3.

### [Comparative Example 1]

First, an aluminum alloy base plate made of an A6101-T7 alloy was prepared. Next, the base plate was cut into a plate with a length of 20 mm, a width of 40 mm, and a thickness of 2 mm. Then, the aluminum alloy base plate was subjected to the zincate treatment twice.

Next, in a Ni plating solution containing 300 to 450 g/L nickel sulfamate and 30 to 40 g/L boric acid, which is a typical nickel plating bath composition, electroplating was carried out at an anode current density of 2 to 15 A/dm² and a liquid temperature of 40 to 60 °C for 80 to 120 seconds, with the aluminum alloy base plate after the zincate treatment as the cathode, and a Ni electrode plate as the anode. Thus, a nickel-plated layer was formed on the aluminum alloy base plate.

Further, in a typical tin plating bath composition, a Sn plating solution containing 30 to 50 g/L tin (II) sulfate, 40 to 80 g/L sulfuric acid, 30 to 60 g/L cresol sulfonic acid, and 0.5 to 1 g/L beta-naphthol, electroplating was carried out with an anode current density of 0.5 to 2 A/dm² and a cathode current density of 0.5 to 4 A/dm² at a liquid temperature of 15 to 25 °C for 450 to 700 seconds, with a nickel-plated aluminum alloy base plate as the cathode, and a Sn electrode plate as the anode. Thus, a tin-plated layer was formed on the nickel-plated layer on the aluminum alloy base plate.

Then, the aluminum alloy base plate on which the tin-plated layer and the nickel plating layer were formed was cleaned and dried to obtain the test piece of this example.

### [Comparative Example 2]

First, an aluminum alloy base plate made of an A6101-T7 alloy was prepared. Next, the base plate was cut into a plate with a length of 20 mm, a width of 40 mm, and a thickness of 2 mm. Then, without being subjected to a plating treatment, the aluminum alloy base plate was used as the test piece of this example.

### [Comparative Example 3]

First, an aluminum alloy base plate made of an A1050 H24 alloy was prepared. Then, the base plate was cut into a plate with a length of 20 mm, a width of 40 mm, and a thickness of 2 mm. Then, without being subjected to a plating treatment, the aluminum alloy base plate was used as the test piece of this example.

### [Comparative Example 4]

The test piece of this example was obtained in the same method as in Example 1 except that the pull-up speed of the aluminum alloy base plate was changed as shown in Table 3. That is, in this example, after the aluminum alloy base plate was immersed in the melt of tin in the crucible, the ultrasonic oscillation switch was immediately turned on without preheating, and the aluminum alloy base plate was pulled up from the melt at a predetermined speed while oscillating the horn in the ultrasonic plating equipment. Table 3 shows the tin purity of the tin-plated layer formed on the surface of the aluminum alloy base plate in the test piece of this example.

**[Table 2]**

| | Material | Heat treatment | Sample Plate Thickness (mm) | Zincate Treatment | Plating Method | Plating Material | Horn Width (mm) | Horn Output (W) |
|---|---|---|---|---|---|---|---|---|
| Example 1 | A6101 | T6 | 2 | No | Ultrasonic Waves | Sn | 2.5 | 40 |
| Example 2 | A6101 | T6 | 2 | No | Ultrasonic Waves | Sn | 2.5 | 40 |
| Example 3 | A6101 | T6 | 2 | No | Ultrasonic Waves | Sn | 2.5 | 40 |
| Example 4 | A6101 | T6 | 2 | No | Ultrasonic Waves | Sn | 2.5 | 33 |
| Example 5 | A6101 | T6 | 2 | No | Ultrasonic Waves | Sn | 2.5 | 20 |
| Example 6 | A6101 | T6 | 2 | No | Ultrasonic Waves | Sn | 2.5 | 20 |
| Example 7 | A6101 | T6 | 2 | No | Ultrasonic Waves | Sn | 2.5 | 20 |
| Example 8 | A6101 | T6 | 2 | No | Ultrasonic Waves | Sn | 2.5 | 20 |
| Example 9 | A6101 | T6 | 2 | No | Ultrasonic Waves | Sn | 2.5 | 40 |
| Example 10 | A6101 | T7 | 2 | No | Ultrasonic Waves | Sn | 2.5 | 40 |
| Example 11 | A1050 | H24 | 2 | No | Ultrasonic Waves | Sn | 2.5 | 40 |
| Comparative Example 1 | A6101 | T7 | 2 | Yes | Electro-plating | Sn (With Ni Base) | - | - |
| Comparative Example 2 | A6101 | T7 | 2 | - | - | - | - | - |
| Comparative Example 3 | A1050 | H24 | 2 | - | - | - | - | - |
| Comparative Example 4 | A6101 | T6 | 2 | No | Ultrasonic Waves | Sn | 2.5 | 20 |

**[Table 3]**

| | Sn Molten Metal Temperature (°C) | Immersion Time (seconds) | Gas Purge | Pull-up Speed (mm/s) | Sn Purity (%) | Base Material Hardness H (Before Immersion) (HV_{0.1}) |
|---|---|---|---|---|---|---|
| Example 1 | 260 | 5 | Yes | 1.0 | 99.99 | 69.8 |
| Example 2 | 260 | 10 | Yes | 1.0 | 99.99 | 69.8 |
| Example 3 | 260 | 15 | Yes | 1.0 | 99.99 | 69.8 |
| Example 4 | 260 | 15 | Yes | 1.0 | 99.99 | 69.8 |
| Example 5 | 260 | 15 | Yes | 1.0 | 99.99 | 69.8 |
| Example 6 | 300 | 15 | Yes | 1.0 | 99.99 | 69.8 |
| Example 7 | 300 | 5 | Yes | 1.0 | 99.99 | 69.8 |
| Example 8 | 300 | 15 | Yes | 0.5 | 99.99 | 69.8 |
| Example 9 | 300 | 15 | Yes | 5.0 | 99.99 | 69.8 |
| Example 10 | 300 | 15 | Yes | 1.0 | 99.99 | 57.7 |
| Example 11 | 260 | 15 | Yes | 1.0 | 99.99 | 39.7 |
| Comparative Example 1 | - | - | - | - | - | 57.7 |
| Comparative Example 2 | - | - | - | - | - | 57.7 |
| Comparative Example 3 | - | - | - | - | - | 38.8 |
| Comparative Example 4 | 260 | 0 | Yes | 1.0 | 99.99 | 69.8 |

### [Evaluation]

Cross-sectional observation, Vickers hardness of the plated layer and base material (aluminum alloy base plate), appearance observation, thickness of the plated layer, contact resistance value, and adhesion of the plated layer were evaluated for each test peace prepared as described above.

### (Cross-Sectional Observation)

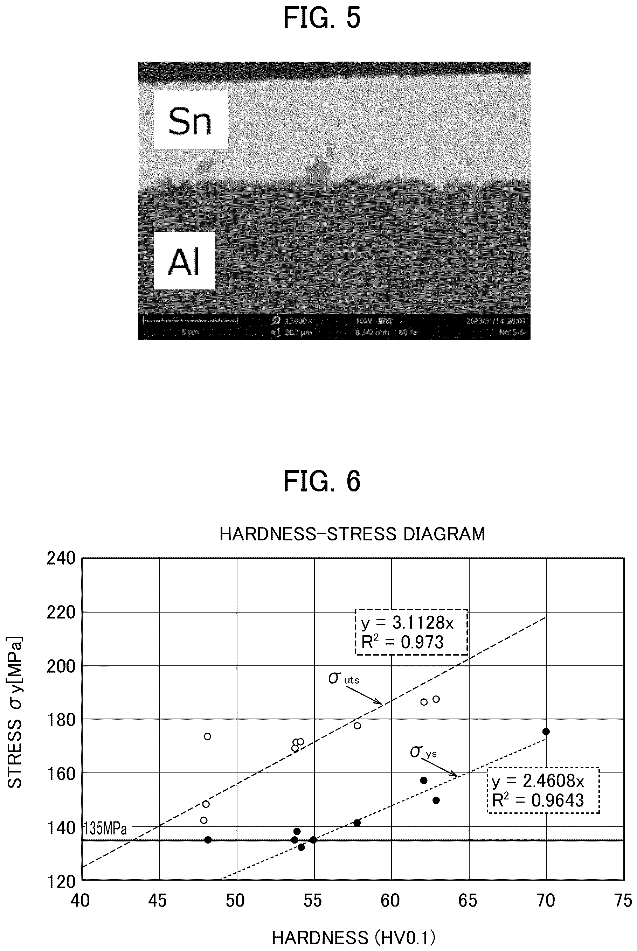

The appearance of the test piece in Example 1 was visually observed. Furthermore, the cross-section of the test piece in Example 1 was observed with a scanning electron microscope (SEM). Fig. 4 illustrates the appearance of the test piece in Example 1, and Fig. 5 illustrates a cross-sectional observation result of the test piece in Example 1 with a scanning electron microscope (SEM).

As illustrated in Fig. 4, the tin-plated layer is neatly formed on the surface of the aluminum alloy base plate, and the tin-plated layer is shiny. Furthermore, as illustrated in Fig. 5, the tin-plated layer is formed with a substantially uniform thickness on the surface of the aluminum alloy base plate, and the tin-plated layer is in direct contact with the surface of the aluminum alloy base plate.

### (Vickers hardness)

The Vickers hardness of the plated layer and the base material (aluminum alloy base plate) of the test piece in each example was measured in accordance with JIS Z2244 (Vickers hardness test-Test method). An average value of 10 measurements was taken as a result of the Vickers hardness. The Vickers hardness values of the plated layer and the base material (aluminum alloy base plate) of the test piece in each example are summarized in Table 4. The Vickers hardness of the aluminum alloy base plate before plating treatment, measured in accordance with JIS Z2244, is also shown in Table 3.

Tables 3 and 4 show that the Vickers hardness of the base material (aluminum alloy base plate) of Examples 1 to 11 do not decrease significantly before and after the formation of the plating layer. In other words, when the tin-plated layer is formed, the aluminum alloy base plate is immersed in the melt of tin, but the immersion time is short, so the mechanical properties (hardness) of the aluminum alloy base plate do not change significantly.

Here, FIG. 6 illustrates the relationship between the Vickers hardness of the aluminum alloy base plate after formation of the tin-plated layer, and the tensile strength σᵤₜₛ and yield stress σ_{ys} of the test pieces, in Examples 1 to 10 using A6101 as the aluminum alloy base plate. The tensile strength σᵤₜₛ and yield stress σ_{ys} of the test pieces in Examples 1 to 10 were measured according to JIS Z2241 (Metallic materials-Tensile testing-Method of test at room temperature). Then, by using the Vickers hardness of the aluminum alloy base plate after the formation of the tin-plated layer, and the tensile strength σᵤₜₛ of the test pieces, regression analysis was performed by the least square method to obtain the approximate straight line, and the approximate formula and coefficient of determination were calculated. Similarly, using the Vickers hardness of the aluminum alloy base plate after the formation of the tin-plated layer, and the yield stress σ_{ys} of the test piece, regression analysis was performed by the least square method to obtain the approximate straight line, and the approximate formula and coefficient of determination were calculated.

As illustrated in Fig. 6, when the Vickers hardness of the aluminum alloy base plate after the formation of the tin-plated layer is 28HV_{0.1} to 90HV_{0.1}, the yield stress σ_{ys} of the test piece is approximately 70 MPa to 220 MPa. Since the aluminum alloy base plate after the formation of the tin-plated layer has the yield stress within this range, it has excellent fastening reliability and vibration durability, and can be suitably used as a bus bar for electric vehicles.

### (Appearance Observation)

The appearance of the test pieces of Example 1 to11 and Comparative Examples 1 and 4 was visually observed to evaluate presence of parts on which the tin-plated layer is not deposited. As a result of the visual observation, the test pieces having less parts on which the tin-plated layer is not deposited, and having good surface condition, were evaluated as "good". In contrast, the test pieces extensively having parts on which the tin-plated layer is not deposited were evaluated as "poor". The evaluation results are shown in Table 4.

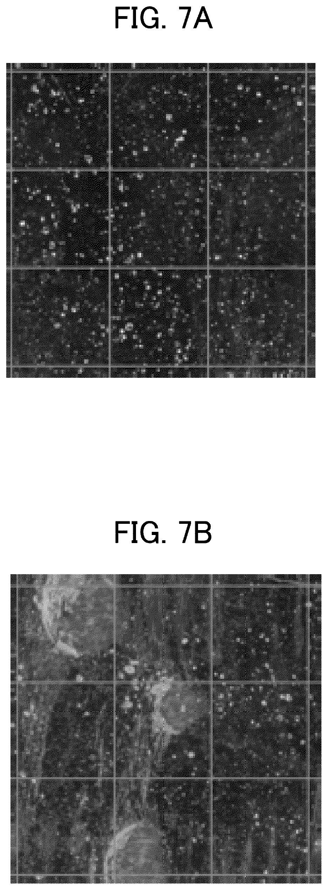

The column of "Deposition State" in Table 4 indicates that the test pieces of Examples 1 to 11 have less parts on which the tin-plated layer is not deposited, and have a good surface condition. FIG. 7A illustrates the surface condition of the test piece in Example 3. FIG. 7A illustrates that the test piece in Example 3 has the tin-plated layer that is uniformly formed, and almost no parts on which the tin-plated layer is not deposited.

In contrast, it is indicated that the test piece in Comparative Example 4 has many parts on which the tin-plated layer is not deposited, and has a poor surface condition. FIG. 7B illustrates the surface condition of the test piece in Comparative Example 4. FIG. 7B shows that the test piece in Comparative Example 4 has the tin-plated layer that is not formed uniformly, and many parts on which the tin-plated layer is not deposited. This indicates that the deposition of the tin-plated layer is improved by preheating the aluminum alloy base plate by soaking the aluminum alloy base plate for a predetermined time during immersion of the aluminum alloy base plate in the melt of tin.

### (Thickness of Plated layer)

The thickness of the plated layer in the test pieces in the examples was measured by X-ray Fluorescence Test Method (XRF) in accordance with JIS H8501 (Methods of thickness test for metallic coatings). An average value of three measurements of the thickness of the plated layer is taken as a measurement result. Table 4 shows the measurement results of the thickness of the plated layer in the test pieces of samples.

Table 4 shows that the thickness of the tin-plated layer in the test pieces of Examples 1 to 11 is not significantly different from the thickness of the plated layer in Comparative Example 1 that is formed by the electroplating method. Therefore, even if the plated layer is formed by the ultrasonic method, the thickness equivalent to that of the conventional electroplating method can be ensured.

### (Contact Resistance Value)

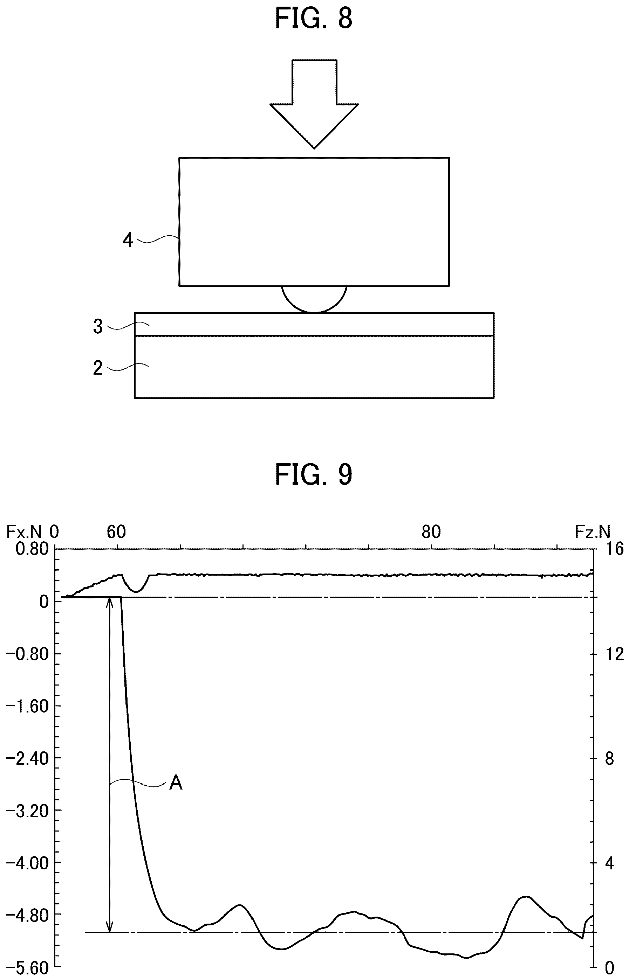

Using a device illustrated in FIG. 8, the contact resistance values of the test pieces in the Examples were measured. Specifically, a contact member 4 was produced by forming a hemispherical protrusion on a metal plate having a recess. The hemispherical protrusion was formed at the lower end of the recess. The contact member 4 was made of pure copper C 1020, and the radius R of the protrusion was 1 mm. In the case of Examples 1 to 11 and Comparative Examples 1 and 4 having the plated layer, the test pieces in the examples were arranged such that the plated layer faced the protrusion. In the case of Comparative Examples 2 and 3 having no plated layer, the surfaces of the aluminum alloy base plates in the examples were arranged to face the protrusion.

Next, one terminal of a DC power supply and a voltmeter was electrically connected to the contact member 4, and the other terminal of the DC power supply and the voltmeter was electrically connected to the test piece. Then, as indicated by the arrow in FIG. 8, a load was applied to the contact member 4 to bring the protrusion into contact with the surface of the test piece. When the load applied to the contact member 4 reached 10 N, the contact resistance between the contact member 4 and the test piece was measured. An average value of three measurements values of the contact resistance was taken as a measurement result. Table 4 shows the measured contact resistance values of the test pieces in the examples.

As shown in Table 4, the contact resistance of the test pieces in Examples 1 to 11 is less than 1 mΩ, which is lower than that of the test piece in Comparative Example 1 formed by electroplating. The contact resistance of the test pieces in Examples 1 to 11 is much lower than that of the test pieces in Comparative Examples 2 and 3, in which no plated layer is formed. Therefore, by forming a tin-plated layer in the ultrasonic method, the contact resistance value is greatly reduced, and heat generation at the connection can be suppressed.

### (Adhesion of Plated layer)

The adhesion of the plated layer was evaluated for the test pieces in Examples 1 to 11 and Comparative Examples 1 and 4. The adhesion force (N) of the plated layer was measured by using Bruker's UMT TriboLab manufactured by Bruker (multifunctional tribology evaluator (friction and wear tester)) as follows.

First, a diamond indenter with R = 0.2 mm was attached to a tip of a testing machine. Then, after an indenter was lowered onto the plated surface of a test piece under a vertical load of 15 N, the indenter was moved to rub, that is, to scratch the test piece in one direction. Then, an adhesion force (N) was defined by a horizontal load (N) of the curve obtained. Specifically, when the indenter was lowered onto the plated surface of the test piece under a vertical load of 15 N, and then moved to rub the test piece in one direction, a graph illustrating the relationship between the load and the moving distance as illustrated in Fig. 9 was obtained. The horizontal load indicated by symbol A in Fig. 9 was defined as the adhesion force of the plated layer. An average value of three measurements values of the adhesion force was taken as a measurement result. Table 4 shows the measurement results of the adhesion force of the plated layer on the test pieces of the examples.

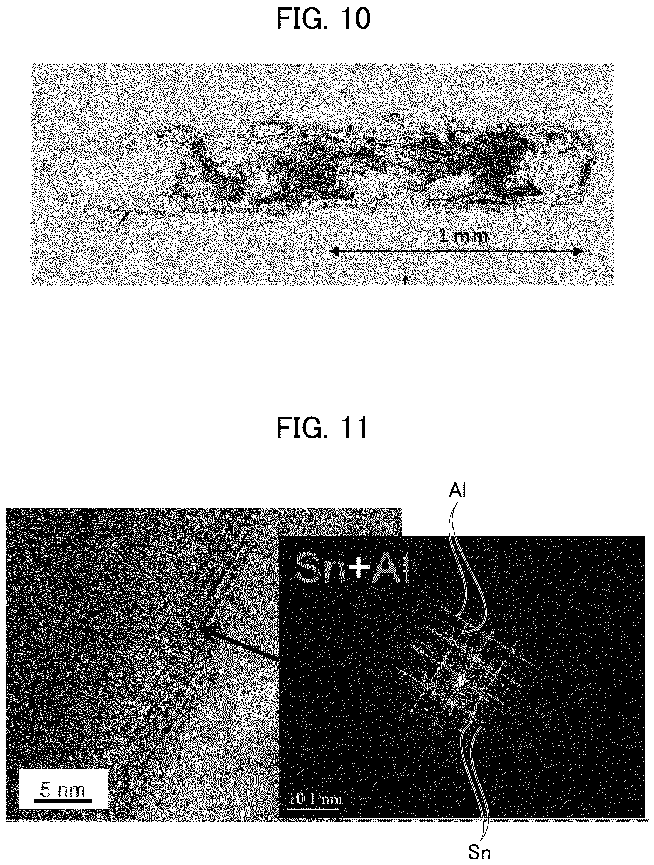

Here, it will be explained why the indenter was lowered onto the plated surface of the test pieces with a vertical load of 15 N being applied to the diamond indenter. FIG. 10 illustrates an observation result of scratch marks formed on the test piece, using scanning electron microscopy. The observation result is also shown as a graph in FIG. 9. As a result of elemental analysis of the scratch marks illustrated in Fig. 10, it was confirmed that the black part indicated aluminum base material. Further, the adhesion evaluation described above was carried out by changing the vertical load applied to the diamond indenter to 5 N, 10 N, and 15 N. As a result, the exposure of aluminum base material was significantly confirmed at the vertical load of 15 N. Therefore, when the vertical load applied to the diamond indenter was 15 N, it was considered that the tin-plated layer could be intentionally peeled off at the interface between the aluminum base material and the tin-plated layer, and the horizontal load measured in this case was defined as the adhesion force (N) of the plated layer.

As shown in Table 4, the adhesion force of the plated layer in Examples 1 to 11 is not greatly different from that of the plated layer in Comparative Example 1 formed by electroplating. Therefore, even when the plating layer is formed by the ultrasonic method, the adhesion force equivalent to that of the conventional electroplating method can be ensured.

**[Table 4]**

| | Base Material Hardness H (After Immersion) (HV_{0.1}) | Plating Hardness (HV_{0.1}) | Deposition State | Average Layer Thickness d (µm) | Contact Resistance (mΩ) | Adhesion (N) |
|---|---|---|---|---|---|---|
| Example 1 | 68.9 | 40.13 | Good | 6.9 | 0.43 | 4.94 |
| Example 2 | 66.7 | 44.38 | Good | 6.1 | 0.43 | 4.97 |
| Example 3 | 72.7 | 38.34 | Good | 7.7 | 0.37 | 5.04 |
| Example 4 | 69.0 | 44.92 | Good | 5.0 | 0.39 | 5.06 |
| Example 5 | 69.7 | 33.57 | Good | 7.0 | 0.41 | 4.96 |
| Example 6 | 65.2 | 35.00 | Good | 6.8 | 0.57 | 5.18 |
| Example 7 | 65.1 | 37.96 | Good | 8.7 | 0.40 | 5.07 |
| Example 8 | 63.4 | 37.33 | Good | 4.8 | 0.36 | 5.22 |
| Example 9 | 69.3 | 34.91 | Good | 4.5 | 0.64 | 4.99 |
| Example 10 | 57.0 | 36.30 | Good | 6.8 | 0.60 | 5.09 |
| Example 11 | 37.9 | 41.36 | Good | 6.9 | 0.40 | 5.00 |
| Comparative Example 1 | - | 45.90 | Good | 5.6 | 2.63 | 5.10 |
| Comparative Example 2 | - | - | - | - | 20.29 | - |
| Comparative Example 3 | - | - | - | - | 53.24 | - |
| Comparative Example 4 | 70.3 | 37.66 | Poor | 7.1 | 0.45 | 4.82 |

Here, Fig. 11 illustrates the observation results of the interface between the tin-plated layer and the aluminum alloy base plate in the test piece in Example 3 using transmission electron microscopy (TEM). As illustrated in Fig. 11, a matching interface was observed at the interface between the aluminum and the tin-plated layer. As a result of analyzing the matching interface, it was found that the Sn (220) surface and the aluminum (200) surface formed a matching surface and formed a strong metallic bond. In addition, the adhesion force of the tin-plated film in this case was 5.04 N as the measurement result in Table 4 shows, so that it can be considered that the matching interface as illustrated in Fig. 11 is formed at the plating interface if the adhesion force is about 5 N.

Although the present invention has been described above by reference to the embodiment, the present invention is not limited to those and the configuration of parts can be replaced with any configuration having a similar function, as long as they lie within the scope of the claims.

## Claims

1. An aluminum alloy bus bar (1) comprising:
a bus bar base material (2) made of an aluminum alloy; and
a tin-plated layer (3) formed on at least a part of a surface of the bus bar base material (2) and in direct contact with the surface;
wherein aluminum in the bus bar base material (2) is directly bonded to tin in the tin-plated layer (3).

2. The aluminum alloy bus bar (1) according to claim 1, wherein the bus bar base material (2) on which the tin-plated layer (3) is formed has Vickers hardness of 28HV_{0.1} to 90HV_{0.1}.

3. The aluminum alloy bus bar (1) according to claim 1 or 2, wherein adhesion force of the tin-plated layer (3) to the bus bar base material (2) is 4.9 N or more.

4. The aluminum alloy bus bar (1) according to any one of claims 1 to 3, wherein a surface of the aluminum alloy bus bar (1) has a contact resistance value of 2.6 mΩ or less.

5. The aluminum alloy bus bar (1) according to any one of claims 1 to 4, wherein the bus bar base material (2) is made of an A6101 alloy as specified in JIS H4100.

6. A method of manufacturing the aluminum alloy bus bar (1) according to any one of claims 1 to 5, comprising:
preheating the bus bar base material (2) by immersing the bus bar base material (2) in a melt, which is formed by melting metal that constitutes the tin-plated layer (3), for a predetermined time;
applying ultrasonic waves to the melt while the bus bar base material (2) is immersed in the melt; and
taking the bus bar base material (2) out of the melt while applying ultrasonic waves to the melt.

7. The method of manufacturing the aluminum alloy bus bar (1) according to claim 6, wherein in the taking the bus bar base material (2) out of the melt, the bus bar base material (2) is surrounded by an inert atmosphere.
